# EUROPEAN PATENT APPLICATION

(11) **EP 3 622 864 A1**
(43) Date of publication of application: **18.03.2020**
(21) Application number: 18200879.7
(22) Date of filing: 17.10.2018
(51) Int. Cl.: A47J 36/02

(54) **BAKEWARE, COOKWARE AND/OR GRILLWARE ITEM, METHOD OF FORMING A BAKEWARE, COOKWARE AND/OR GRILLWARE ITEM, AND APPARATUS FOR COATING A BAKEWARE, COOKWARE AND / OR GRILLWARE ITEM**

(30) Priority: 17.09.2018 EP 18194884
(71) Applicant: IHI Hauzer Techno Coating B.V., 5928 LL Venlo (NL)
(72) Inventor: Xiaowei, Song, 34333 Älmhult (SE); Doerwald, Dave, 6515 HP Nijmegen (NL); Jacobs, Ruud, 5912 XX Venlo (NL)
(74) Representative: Manitz Finsterwald Patent- und Rechtsanwaltspartnerschaft mbB

(57) **Abstract**

The present invention relates to a bakeware, cookware and/or grillware item comprising a base, a heating side arranged at a first side of the base; and a cooking side arranged at a second side of the base, wherein at least the cooking side and optionally also the heating side comprises an at least substantially hydrogen free DLC layer, especially an arc ion plated, sputtered or Hipims deposited at least substantially hydrogen free DLC layer structure. The invention further relates to a method of forming a bakeware, cookware and/or grillware item and to an apparatus for coating a bakeware, cookware and/or grillware item.

## Description

The present invention relates to a bakeware, cookware and/or grillware item comprising a base, a heating side arranged at a first side of the base; and a cooking side arranged at a second side of the base. The invention further relates to a method of forming a bakeware, cookware and/or grillware item and to an apparatus for coating bakeware, cookware and/or grillware item.

Bakeware, cookware and/or grillware is typically used to transfer heat from a source of energy to items of food in order to bake, fry, cook or grill the items of food. It is generally desirable that the containers used for baking, cooking and/or grilling have non-stick properties so that the items of food do not adhere to the respective container. It is further desirable that the surfaces of the containers can be washed readily, for example in a dish washer. It is further desirable that the cooking surface provides wear resistance to mechanical load applied on the surfaces that is for example created by the use of spatulas, knives, spoons etc. with the bakeware, cookware and/or grillware item.

Current state of the art non-stick coatings of bakeware, cookware and/or grillware comprise e.g. PTFE (e.g. Teflon) to form non-stick pans. Such coatings comprise materials which are no longer desirable in the food industry and are prone to being scratched. Moreover, these coatings cannot readily be used in a dish washer as they degrade within a few cycles. Moreover, it has also been found that the non-stick properties of these coatings also degrade with the number of times the container is heated, used and subsequently washed. It has also been established that e.g. PTFE coated pans should not be used in conjunction with an induction hob.

In view of the above it is an object of the present invention to provide a bakeware, cookware and/or grillware item having a cooking side that is more durable with respect to scratches, that is less susceptible to the chemical environment present e.g. in a dish washer, that has an increased lifetime of at least its non-stick properties and that can be produced cost efficiently. It is a further object of the present invention to make available a bakeware, cookware and/or grillware item with the desired non-stick properties and lifetime that can be used without detriment with any normal form of heating sources including induction hobs.

The above objects are satisfied by a bakeware, cookware and/or grillware item in accordance with claim 1.

Such a bakeware, cookware and/or grillware item comprises a base, a heating side arranged at a first side of the base; and a cooking side arranged at a second side of the base, with the cooking side being oppositely disposed to the heating side, wherein the cooking side and optionally also the heating side comprises an at least substantially hydrogen free diamond like carbon DLC layer structure or a hydrogen free DLC layer structure, especially an arc ion plated, sputtered or high-power impulse magnetron sputtering (Hipims) deposited at least substantially hydrogen free DLC layer structure.

Moreover, at least substantially hydrogen free DLC layer structures have a comparatively high hardness which makes the surface these are present on more durable to scratches. It has also been found that a hydrogen free DLC layer structure is less susceptible to chemical environments such as the ones present in a dish washer increasing the lifetime of products that are coated with such layer structures.

Furthermore, at least substantially hydrogen free DLC layer structures have a comparatively good coating adhesion and a high hardness and hence also for this reason an increased lifetime. By way of example, some frying pans coated with a PTFE coating and placed in of a dish washer have shown deficient coatings after 3 to 5 washing cycles, as the non-stick properties of PTFE are no longer present after such few wash cycles. In contrast to this frying pans according to the invention coated with an at least substantially hydrogen free DLC layer structure have a significantly improved performance and resistivity against the detergents used in a dishwasher such that these are more durable. Moreover, due to the far superior scratch resistance the non-stick properties have been found to survive more than 3 times the amount of cooking procedures than e.g. achievable with commercially available PTFE coated pans.

In this connection it should be noted that an at least substantially hydrogen free DLC layer structure is a DLC layer structure containing less than 1 at% hydrogen based on 100 at% of the at least substantially hydrogen free DLC layer structure.

In this connection it should further be noted that if the DLC layer structure is produced using a carbon target with a hydrogen containing gas in the deposition process, then the resultant DLC layer structure is a DLC layer structure containing between 0.5 and 20 at% hydrogen based on 100 at% of the at least substantially hydrogen free DLC layer structure. In this connection it should be noted that a substantially hydrogen free DLC layer is a DLC layer structure containing less than 1 at% hydrogen based on 100 at% of the at least substantially hydrogen free DLC layer structure, unless, as is the case in this embodiment, the DLC layer is produced using a carbon target with a hydrogen containing gas in the deposition process in which case "a substantially hydrogen free DLC layer" means a resultant DLC layer structure containing between 0.5 and 20 at% hydrogen based on 100 at% of the at least substantially hydrogen free DLC layer structure.

The at least substantially hydrogen free DLC layer structure may have a thickness selected in the range of 100 to 2000 nm, in particular of 200 to 1200 nm, especially of 300 to 600 nm. Such a coating thickness has been found to be advantageous in achieving the above objects.

The at least substantially hydrogen free DLC layer structure may have a hardness selected in the range of 20 to 70 GPa, in particular of 30 to 50 GPa.

The at least substantially hydrogen free DLC structure may have a coefficient of friction in the range between 0.1 and 0.3 in dry condition. In this connection it should be noted that the coefficient of friction is generally measured using a pin-on-disc setup. In such a setup a sample is mounted on a rotating stage while a known force is applied on a pin or a ball in contact with the sample surface to create the wear. The coefficient of friction is then recorded in situ by measuring the amount of volume lost which correlates to the wear rate of the material. The coefficient of friction is generally measured using Anton Paar and Nanovea equipment that satisfies at least one of the following standards: ASTM G99, ASTM G133, and DIN 50324.

A proportion of the sp2 to sp3 content of the at least substantially hydrogen free DLC layer structure lies in the range of 80 to 30 % sp2 to 20 to 70 % sp3, in particular wherein the sp3 content is greater than 30% sp3 and especially above 40 % based on 100% of the at least substantially hydrogen free DLC layer structure. The at least substantially hydrogen free DLC layer structure may comprise one or more a ta-C layers and/or one or more a-C layers. These are beneficial characteristics of the at least substantially hydrogen free DLC layer structure.

In this connection it should be noted that the at least substantially hydrogen free DLC layer structure could either be formed by a single DLC layer having the characteristics listed in the foregoing, or comprise a plurality of DLC layers each varying slightly in their absolute values of the above characteristics in comparison to one another, e.g. with respect to their hardness. The provision of several DLC layers with e.g. varying hardnesses is beneficial from the point of view of reducing the internal stresses within the layer structures and hence leads to an improved adhesion of the DLC layer structure to the base and hence to more durable bakeware, cookware and/or grillware items.

In this connection it should be noted that the cooking side of a bakeware, cookware and/or grillware item is the side on which the food is placed, which comprises a cooking surface and also inner side walls of a rim surrounding the cooking surface. The coatings discussed in the foregoing could either be provided solely on the cooking surface or such that they cover both the cooking surface and the inner side walls of the rim of the bakeware, cookware and/or grillware item or indeed such that the coatings cover all of the outer surfaces of the bakeware, cookware and/or grillware item.

The at least substantially hydrogen free DLC layer structure may comprise either a top layer having a dopant present therein, or includes a dopant throughout the at least substantially hydrogen free DLC layer structure. A DLC layer structure is typically see through and due to diffractive effects may provide the item with a multicolour top layer with the multi-coloured top layer varying in colour in dependence on the angle at which the bakeware, cookware and/or grillware item is viewed. By using a dopant e.g. of Titanium, the cooking side can be provided with a dark grey metallic look.

The dopant may be selected from the group of members consisting of titanium, zirconium, hafnium, vanadium, niobium, tantalum, chromium, molybdenum, tungsten, nitrogen, hydrogen, silicon and combinations of the foregoing, especially wherein the dopant is selected from one of titanium and zirconium. Such Dopants can be used in a cost-effective and reliable manner to form a cooking side with the desired color.

A percentage of the dopant is 0.2 to 10 at%, in particular 0.5 to 6 at%, of the at least substantially hydrogen free DLC layer structure respectively of the top layer comprising the dopant. These are the levels at which the dopant has to be present within the top layer or the DLC layer to achieve the desired colour.

The bakeware, cookware and/or grillware item may further comprise an adhesion layer that is arranged between the base and the at least substantially hydrogen free DLC layer structure, with the adhesion layer optionally comprising at least one material selected from the group of members consisting of titanium, zirconium, hafnium, vanadium, niobium, tantalum, chromium, molybdenum, tungsten, nitrogen, silicon, carbon, and combinations of the foregoing and preferably comprising titanium, in particular wherein the adhesion layer has a layer thickness of 10 to 200 nm, especially wherein the adhesion layer is formed directly on the base. The provision of an adhesion layer reduces the internal stresses between the base and the DLC layer and hence improves the durability of the bakeware, cookware and/or grillware item.

The bakeware, cookware and/or grillware item may further comprise a gradient layer that is formed directly beneath the at least substantially hydrogen free DLC layer structure. Such a gradient layer can be used to improve the adhesion of the DLC layer to the layer beneath the gradient layer and thereby also improve the durability of the bakeware, cookware and/or grillware item.

The gradient layer may comprise a mixture of the materials of at least some of the components forming the at least substantially hydrogen free DLC layer structure and of the layer directly beneath the gradient layer.

A layer thickness of the gradient layer may be selected in the range of 2 to 500 nm, especially in the range of 5 to 200 nm. Depending on the material from which the gradient layer is formed these have been found to be advantageous for the improved attachment of the DLC layer to the layer there beneath via the gradient layer.

The gradient layer may either be formed directly on the adhesion layer and the material of the layer arranged directly beneath the gradient layer is the material of the adhesion layer or the gradient layer may be formed directly on the base and the material of the layer arranged directly beneath the gradient layer is the material of the base. Thereby beneficial structures of the bakeware, cookware and/or grill-ware items can be formed.

The base may comprise a metal layer, in particular a metal layer selected from the group of members consisting of an aluminum layer, an aluminum alloy layer, an anodized aluminum layer, a cast aluminum layer, a copper layer, a copper alloy layer, a cast copper layer, an iron layer, an iron alloy layer, a cast iron layer, a stainless steel layer, a polished metal layer, a brushed metal layer, a sanded metal layer, a bead-blasted metal layer, a hammered metal layer and combinations of the foregoing. Such base materials lead to particularly good bakeware, cookware and/or grillware items that ensure a homogenous cooking temperature throughout the cooking side.

According to a further aspect the present invention relates to a method of forming a bakeware, cookware and/or grillware items, such as the ones discussed herein, the method comprising the following steps,
- placing a plurality of uncoated items of the bakeware, cookware and/or grillware item in a vacuum chamber and evacuating said vacuum chamber and optionally heating said uncoated item to a predetermined temperature;
- etching at least a cooking side of said uncoated item; and
- coating said cooking side with an at least substantially hydrogen free DLC layer structure by means of a physical vapor deposition (PVD) process, especially an arc ion-plating process, a magnetron sputtering process or a Hipims process.

Using this method bakeware, cookware and/or grillware items having the above specifications and advantages can be formed.

The method may further comprise a step of forming an adhesion layer between said etching step and said step of coating said cooking side with the at least substantially hydrogen free DLC layer structure.
Said step of coating said cooking side with an at least substantially hydrogen free DLC layer structure may comprise depositing said at least substantially hydrogen free DLC layer structure together with a dopant material. In this way a colour or look of the finished product can be altered.

A temperature of said vacuum chamber may be regulated to a temperature in the range of 120 to 250°C, in particular of 160 to 200°C during said step of coating said cooking side with the at least substantially hydrogen free DLC layer structure. In this way particularly hard and durable layer structures can be formed.

A pressure in said vacuum chamber may be regulated to a pressure of 10⁻² to 10⁻⁴ mbar during said step of coating said cooking side with an at least substantially hydrogen free DLC layer structure. Such pressures are suited to form the desired structures in an efficient manner.

According to a further aspect the present invention relates to an apparatus for coating bakeware, cookware and/or grillware items, such as the ones discussed herein, said apparatus being configured to carry out a method as discussed herein, the apparatus comprising:
- one or more vacuum chambers, e.g. arranged as a batch processing system or as an inline system;
- one or more arc ion plating, sputtering or Hipims cathodes;
- one or more racks configured to receive a plurality of uncoated items, with the cooking side thereof facing outwardly, with the racks comprising one or more fixation members to hold each of said uncoated items and the racks optionally being configured for single fold rotation around an axis of said one or more vacuum chambers.

By means of such an apparatus the bakeware, cookware and/or grillware items discussed in the foregoing can be coated with a durable, non-stick coating.

By way of example the apparatus may be a batch processing deposition apparatus in which said one or more racks are arranged on a table and said one or more, in particular arc and/or sputter, cathodes are arranged in one or more sidewalls of, preferably only, one vacuum chamber; and said table is configured to be rotated about an axis of rotation of the vacuum chamber in order to expose the cooking sides of the plurality of uncoated items to the one or more cathodes, e.g. arc and/or sputter cathodes, in particular for depositing an at least substantially hydrogen free DLC layer structure on the cooking sides of the plurality of uncoated items.

The apparatus may also be an inline coating system comprising a plurality of vacuum chambers arranged in a series one after another, wherein said one or more racks are arranged to be moved linearly within the respective chamber and from chamber to chamber, wherein each chamber is configured to carry out a process, with the processes being selected from the group of members comprising: heating, evacuating, etching, coating, removing and/or combinations of the foregoing. In this connection it should be noted that some or all of the respective devices used to carry out a respective process in one or more of the vacuum chambers of the inline coating system may be arranged in a sidewall of the respective vacuum chamber of the one or more vacuum chambers.

Further benefits and advantageous embodiments of the invention will become apparent from the dependent claims, from the description and from the accompanying drawings.

Further embodiments of the invention are described in the following description of the Figures. The invention will be explained in the following in detail by means of embodiments and with reference to the drawing in which is shown:
- Fig. 1: a schematic perspective view of a cookware item;
- Fig. 2: a schematic sectional view of a first example of a bakeware, cookware and/or grillware item;
- Fig. 3: a schematic sectional view of a second example of a bakeware, cookware and/or grillware item;
- Fig. 4: a schematic sectional view of a third example of a bakeware, cookware and/or grillware item;
- Fig. 5: a schematic sectional view of a fourth example of a bakeware, cookware and/or grillware item;
- Fig. 6a: a top view of a first apparatus for coating bakeware, cookware and/or grillware items with a lid removed;
- Fig. 6b: a perspective sectional view of the apparatus of Fig. 6a along the sectional line A-A; and
- Fig. 7: a perspective sectional view of a second apparatus for coating bakeware, cookware and/or grillware items.

In the following the same reference numerals will be used for parts having the same or equivalent function. Any statements made having regard to the direction of a component are made relative to the position shown in the drawing and can naturally vary in the actual position of application.

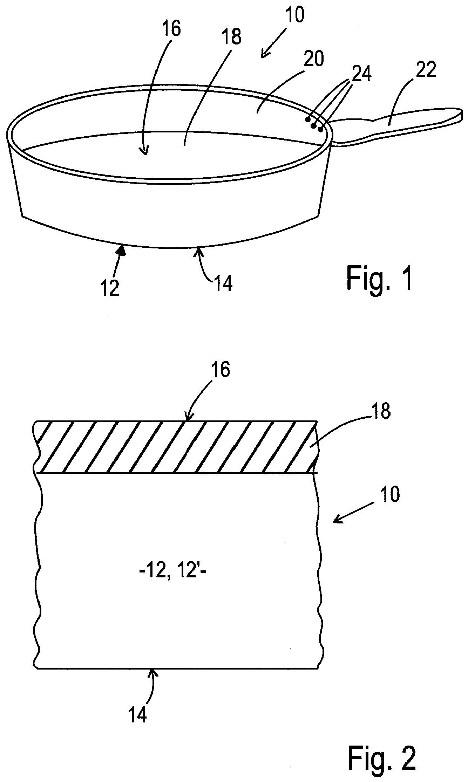

Fig. 1 shows a schematic perspective view of a bakeware, cookware and/or grill-ware item 10. The shown cookware item 10 is a frying pan. The frying pan comprises a base 12. A bottom side of the base 12 comprises a heating side 14 that is configured to be heated by a source of heat e.g. via a cooker, an oven, a bbq or the like (all not shown). A top side of the base 12 comprises a cooking side 16. The top side is arranged on the side of the base 12 opposite to the bottom side.

In the present example only the cooking side 16 of the cookware item 10 comprises an at least substantially hydrogen free DLC layer structure 18 deposited by a PVD process. The cooking side 16 is generally the surface on which food to be cooked is placed and the inner surface of a rim 20.

In this connection it should be noted that it is possible to also provide the heating side 14 of the bakeware, cookware and/or grillware item 10 with an at least substantially hydrogen free DLC layer structure 18 in the same way as discussed herein with respect to the cooking side 16.

The DLC layer structure discussed herein is an arc ion plated at least substantially hydrogen free DLC layer structure. By arc ion plating a DLC layer the introduction of hydrogen into the DLC layer structure 18 can be significantly reduced e.g. in comparison to a plasma assisted chemical vapor deposition (PACVD) process which requires a reactive gas containing hydrogen as the source of carbon for the DLC layer and thereby produces hydrogen containing DLC coatings, i.e. a-C:H coatings.

An at least substantially hydrogen free DLC layer structure as discussed herein has at least one of the following characteristics:
- A hardness selected in the range of 20 to 70 GPa, in particular of 30 to 50 GPa. Such hardnesses are measured using nano-indentation of the surface using a Vickers diamond. In this connection it should be noted that the hardness measurement is performed according to DIN EN ISO 14577-1 (Standardized Nanoindentation).
- A proportion of the sp2 to sp3 content of the at least substantially hydrogen free DLC layer structure 18 lies in the range of 30 to 80 % sp2 to 70 to 20 % sp3, in particular wherein the sp3 content is greater than 30% sp3 and especially above 40% of the at least substantially hydrogen free DLC layer structure 18;
- The at least substantially hydrogen free DLC layer structure comprises one or more ta-C layers and/or one or more a-C layers, and/or
- The at least substantially hydrogen free DLC structure has a coefficient of friction in the range between 0.1 and 0.3 in dry condition.

The cookware item 10 of Fig. 1 further comprises the rim 20 and a handle 22 attached to the rim 20 via fastener elements 24. The fastener elements can, as shown, for example be screws cooperating with corresponding nuts or rivets (not shown).

In this connection it should be noted that the present invention generally relates to bakeware, cookware and/or grillware items 10 and these can be selected from the group of members consisting of a griddle pan, a griddle plate a frying pan or skillet, a pancake pan, a saucepan, a braiser pan, a wok, a stock pot, a saute pan, a roasting pan, a Dutch oven, a French oven, a baking dish, a baking sheet, a baking sheet with sides, an oven tray, a bread pan, a brioche pan, a bundt pan, a cake pan, a doughnut pan, a flan pan, a French bread pan, a jelly roll pan, a muffin tin, a muffin top pan, a pie plate, a popover pan, a springform pan, a tart pan, a tube pan, a pizza pan, a grillware warming rack, a grillage, a grill tray, a barbecue basket, a grill plate, a grill rack, a grilling basket, and a fish basket.

Generally speaking the bakeware, cookware and/or grillware item 10 is an item that is placed over, on or into a source of heat in order to heat up food items present at the bakeware, cookware and/or grillware item 10. For this purpose the bakeware, cookware and/or grillware item 10 has the at least one cooking side 16 that is generally in direct contact with the food.

Fig. 2 shows a schematic sectional view of a first example of the bakeware, cookware and/or grillware item 10. The at least substantially hydrogen free DLC layer structure 18 is directly applied onto the base 12 in this example. The base 12 is generally a metal base that comprises one or more metal layers 12'.

The one or more metal layers 12' are typically selected from the group of members consisting of an aluminum layer, an aluminum alloy layer, an anodized aluminum layer, a cast aluminum layer, a copper layer, a copper alloy layer, a cast copper layer, an iron layer, an iron alloy layer, a cast iron layer, a stainless steel layer, a stainless steel layer, a polished metal layer, a brushed metal layer, a sanded metal layer, a bead-blasted metal layer, a hammered metal layer and combinations of the foregoing.

The one or more metal layers 12' shown in Figs. 2 to 5 may each have a thickness selected in the range of 0.1 to 5 mm. If more than one metal layer 12' is provided then the different metal layers 12' may comprise different materials, with the different materials being selected to form a bake-, cook and/or grill-ware item 10 with desired properties.

By way of example, aluminum and copper cookware 10 is desired as it is more heat conductive than steel and therefore ensure a more uniform heat distribution at the cooking side 16. However, pure aluminum and copper cookware cannot be used on an induction hob. Nevertheless e.g. induction hob compatible cookware items 10, such as frying pans, can be produced that comprise aluminum or copper layers 12', as long as these also comprise a magnetic metal layer 12' e.g. of stainless steel at the heating side 14 that can then cooperate with the induction hob to transfer heat to the aluminum layer 12' respectively the copper layer 12'.

The at least substantially hydrogen free DLC layer structure 18 of Fig. 2 is formed directly on the base 12 as the cooking side 16. The at least substantially hydrogen free DLC layer structure 18 has an sp3 content of 40% of the at least substantially hydrogen free DLC layer structure 18. The at least substantially hydrogen free DLC layer structure 18 has a thickness of 300 nm.

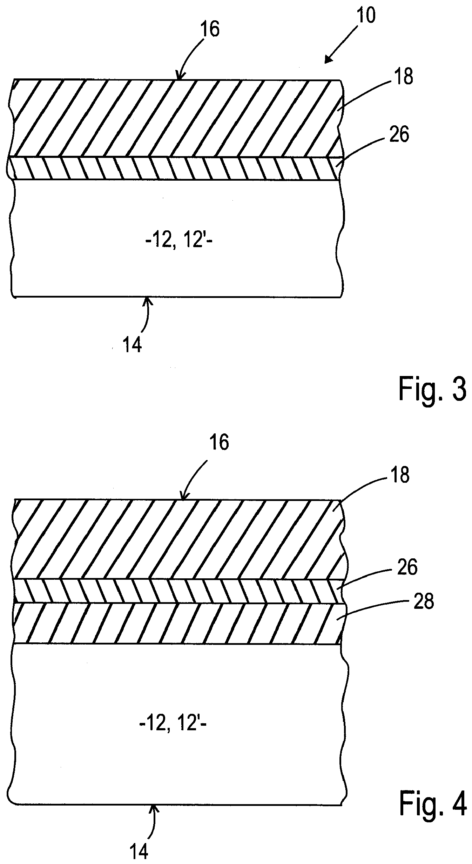

In this connection it should be noted that the at least substantially hydrogen free DLC layer structure 18 or layer structure 18 shown in Fig. 2 and also those shown in Figs. 3 to 5 can have a thickness selected in the range of 100 to 2000 nm, in particular of 200 to 1200 nm, especially of 300 to 600 nm, most preferably of 250 to 350 nm.

The at least substantially hydrogen free DLC layer structure 18 of Fig. 2 is formed directly on a stainless steel base forming one of the metal layers 12' of part of the cookware 10. The stainless steel metal layer 12' in the example of Fig. 2 has a thickness of 2 mm.

Fig. 3 shows a schematic sectional view of a second example of the bakeware, cookware and/or grillware item 10. A gradient layer 26 is formed directly between the base 12 and the at least substantially hydrogen free DLC layer structure 18 or layer structure 18.

The gradient layer 26 may have a thickness selected in the range of 2 to 500 nm, especially in the range of 5 to 200 nm.

Fig. 4 shows a schematic sectional view of a third example of the bakeware, cookware and/or grillware item 10. In this example an adhesion layer 28 is arranged directly between the gradient layer 26 and the metal layer 12'.

The adhesion layer 28 may comprise at least one material selected from the group of members consisting of titanium, zirconium, hafnium, vanadium, niobium, tantalum, chromium, molybdenum, tungsten, nitrogen, silicon and combinations of the foregoing and preferably comprises titanium, such as a Ti or TiN adhesion layer.

The adhesion layer 28 may generally have a layer thickness of 10 to 500 nm, in particular 20 to 200 nm.

It is also conceivable that the layer formed between the DLC layer structure 18 and the metal layer 12' of the base 12 (see Fig. 3) is only an adhesion layer 28 that does not comprise a graded structure.

It should be noted in this connection that the gradient layer 26 can either be formed directly on the adhesion layer 28 and the material of the layer arranged directly beneath the gradient layer 26 is then the material of the adhesion layer 28 or the gradient layer 26 can be formed directly on the base 12 and the material of the layer arranged directly beneath the gradient layer 26 is then the material of the base 12.

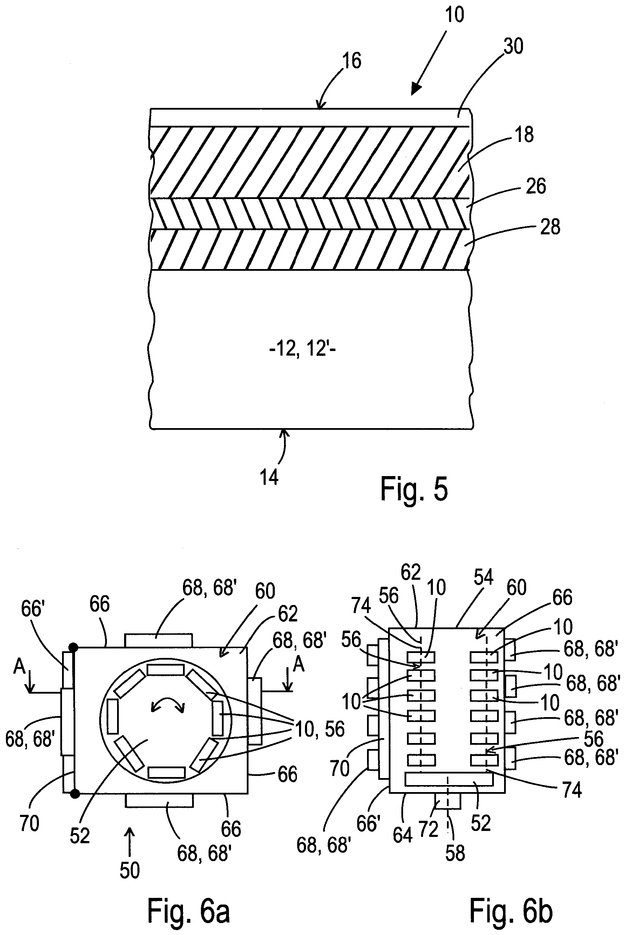

Fig. 5 shows a schematic sectional view of a fourth example of the bakeware, cookware and/or grillware items 10. A top layer 30 is formed directly on top of the at least substantially hydrogen free DLC layer structure 18. The top layer 30 differs from the DLC layer structure 18 there beneath in that the DLC layer of the top layer has a dopant present therein.

In this connection it should be noted that rather than having the top layer 30 with the dopant present therein, the at least substantially hydrogen free DLC layer structure 18 may include a dopant throughout the at least substantially hydrogen free DLC layer structure 18 and/or the gradient layer 26.

The dopant may be selected from the group of members consisting of titanium, zirconium, hafnium, vanadium, niobium, tantalum, chromium, molybdenum, tungsten, nitrogen, silicon and combinations of the foregoing. The preferred dopants are titanium and zirconium.

A percentage of the dopant is 0.5 to 10 at%, in particular 1 to 4 at%, based on 100 at% of the at least substantially hydrogen free DLC layer structure respectively of the top layer comprising the dopant.
Fig. 6a show a top view of a first apparatus 50 for coating bakeware, cookware and/or grillware items 10. The apparatus 50 is a so-called batch processing deposition apparatus 50. A lid 54 (see Fig. 6b) of the apparatus 50 is removed.

The bakeware, cookware and/or grillware items 10 are arranged on a table 52. In fact as shown in Fig. 6b a plurality of bakeware, cookware and/or grillware items 10 are respectively arranged in the ten rows of the apparatus 50 shown in Fig. 6a. As shown in Fig. 6b each row can comprise six such bakeware, cookware and/or grillware items 10.

The number of rows and the number of bakeware, cookware and/or grillware items 10 per row that can be placed into the batch processing deposition apparatus 50 varies in dependence on the size of the bakeware, cookware and/or grillware items 10.

By way of example five times as many Saute pans 10 having a diameter of 16 cm can be installed in one and the same batch processing deposition apparatus 50 as frying pans 10 having a diameter of 34 cm.

Sidewalls 66 of the vacuum chamber 60 respectively comprise a plurality of arc and/or sputter cathodes 68, 68'. The plurality of arc and/or sputter cathodes 68, 68' are used to deposit the various layers and layer structures 18, 26, 28, 30 discussed in the foregoing.

One of the sidewalls 66' comprises a door 70 that is used to access the vacuum chamber 60 for initial loading of uncoated items of the bakeware, cookware and/or grillware items 10 and of subsequent unloading of completed bakeware, cookware and/or grillware items 10.

The bakeware, cookware and/or grillware items 10 comprises a plurality of fixtures 56 that extend within the chamber in parallel to an axis 58 of a vacuum chamber 60 housing the bakeware, cookware and/or grillware items 10 between a top side 62 and a bottom side 64 of the vacuum chamber 60 (see Fig. 6b).

Fig. 6b shows a perspective sectional view of the apparatus 50 of Fig. 6A. Each of the fixtures 56 is present as a rack holding a plurality of the bakeware, cookware and/or grillware items 10 along the axis of rotation 58 of the vacuum chamber 60. A motor 72 is provided in order to rotate the table 52 for single fold rotation around the axis of rotation 58 of said vacuum chamber 60. In this connection it should be noted that the fixture 56 can be configured to be fixed in position and/or such that it rotates about its own axis.

The racks 56 each comprise one or more fixation members 74 per bakeware, cookware and/or grillware items 10. The one or fixation members 74 are configured such that they hold the bakeware, cookware and/or grillware items 10 at their respective heating side 14, such that the cooking sides 16 thereof face outwardly towards the sidewalls 66, 66' of the deposition apparatus 50.

The use of fixtures 56 with fixation members 74 for coating the bakeware, cookware and/or grillware items 10 means that these can be coated in existing deposition apparatus 50.

After a coating process has been carried out the fixtures 56 are removed from the chamber 60 and either new fixtures 56 with a fresh batch of uncoated items of the bakeware, cookware and/or grillware items 10 are introduced into the vacuum chamber 60, or the previous fixtures 56 with a fresh batch of uncoated items of the bakeware, cookware and/or grillware items 10 is reintroduced into the vacuum chamber 60 in order to coat the fresh batch of uncoated items of the bakeware, cookware and/or grillware items 10.

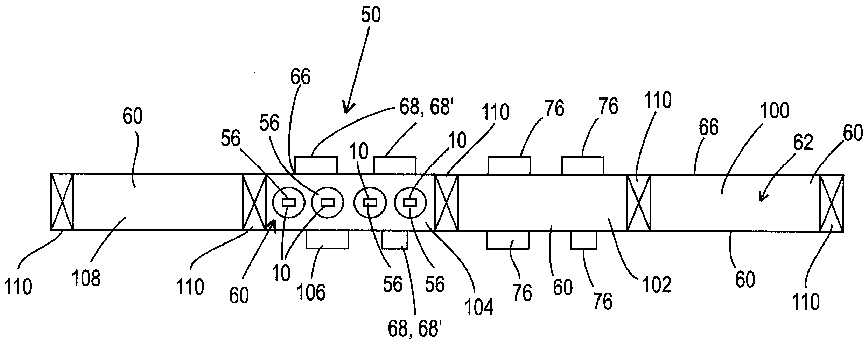

Fig. 7 shows a schematic top view of parts of a second apparatus 50 for coating bakeware, cookware and/or grillware items 10, namely a so-called an inline coating system 50. The second apparatus comprises a plurality of vacuum chambers 60, namely four vacuum chambers 60 arranged in a series one after another.

The deposition apparatus 50 comprises a plurality of fixtures 56 each holding the bakeware, cookware and/or grillware items 10. In inline systems the fixtures 56 are moved linearly within the respective chamber 60. In the example of the drawing of Fig. 7, the bakeware, cookware and/or grillware items 10 are moved from the right to the left in the direction of the arrow.

The bakeware, cookware and/or grillware items 10 are loaded into the deposition apparatus 50 at the first chamber 100. The first chamber 100 is then heated to a temperature in the range of 100 to 300°C for heating the bakeware, cookware and/or grillware items 10 for the purposes of degassing while at the same time evacuating the chamber to a pressure selected in the range of 10⁻⁴ to 10⁻⁵ mbar.

Following the evacuation of the first chamber 100 and a degassing of the uncoated items of the bakeware, cookware and/or grillware items 10 these are then moved into the second chamber 102 where they are etched using an etching source 76.

Following their etching the uncoated items of the bakeware, cookware and/or grill-ware items 10 are moved into third chamber 104 for coating. As indicated the third chamber 104 is also a vacuum chamber 60 that can be evacuated like the first and second chambers 100, 102 using a vacuum pump 106. The arc and/or sputter and/or Hipims sources 68, 68' of the PVD apparatus discussed herein are arranged at the sidewalls 66. It should be noted that further coating chambers may also be provided.

Following the coating process the fixtures 56 comprising the coated bakeware, cookware and/or grillware items 10 can be removed via the chamber 108. For this the vacuum chamber 60 of the last chamber 108 is brought to standard pressure. The individual chambers 100, 102, 104, 108 are separated from one another via load lock systems 110 that lock the respective chamber so that the desired atmosphere and pressure can be achieved within the respective chamber 100, 102, 104, 108.

The fixtures 56 indicated in Fig. 7 are round but may also have a rectangular shape and generally have a rack present thereon that holds a plurality of bakeware, cookware and/or grillware items 10. The fixtures 56 may be stationary, i.e. not rotate or be configured to rotate so as to coat the bakeware, cookware and/or grillware items 10. If the fixtures 56 rotate then the sputter and/or arc cathodes 68, 68' may only need to be present at one wall 66, if the fixtures 56 do not rotate then it is best to arrange the sputter and/or arc cathodes 68, 68' at both sidewalls 66. The cathodes 68, 68' used to form the DLC layer structure 18 can be pure graphite targets 68 that form DLC layer structure 18 without a dopant present therein.

In the following a method of coating a bakeware, cookware and/or grillware item 10 as discussed in the foregoing will be discussed. The method comprising the following steps,
- placing a plurality of uncoated items of bakeware, cookware and/or grillware item 10 in the vacuum chamber 60, 100 and evacuating said vacuum chamber 60, 100 to the desired pressure. Optionally heating said uncoated items to a predetermined temperature;
- etching at least a cooking side of said uncoated item either in the same vacuum chamber 60, or in the second chamber 102; and
- coating said cooking sides 16 with the at least substantially hydrogen free DLC layer structure 18 by means of a PVD process, especially an arc ion plating process, a sputtering process or a Hipims process. The PVD process may take place in the same vacuum chamber 60 as the etching took place or alternatively in a third chamber 104.

If the adhesion layer 28 is formed between said etching step and said step of coating said cooking side 16 with the at least substantially hydrogen free DLC layer structure 20 then this can also take place either in the same vacuum chamber 60, 104 as the coating or in the second chamber 102 in which the etching took place.

### List of reference numerals:

- 10: bakeware, cookware and/or grillware item
- 12, 12': base, metal layer or layers
- 14: heating side
- 16: cooking side
- 18: DLC layer or layer structure
- 20: rim
- 22: handle
- 24: fastener element
- 26: gradient layer
- 28: adhesion layer
- 30: top layer
- 50: deposition apparatus
- 52: table
- 54: lid
- 56: fixture
- 58: axis of rotation
- 60: vacuum chamber
- 62: top side of 60
- 64: bottom side of 60
- 66, 66': sidewall, sidewall with 70
- 68, 68': arc and/or sputter cathode, arc and/or sputter cathode
- 70: door
- 72: motor
- 74: fixation member(s)
- 76: plasma source
- 100: chamber
- 102: chamber
- 104: chamber
- 106: vacuum pump
- 108: chamber
- 110: load lock system

## Claims

1. A bakeware, cookware and/or grillware item (10) comprising
a base (12),
a heating side (14) arranged at a first side of the base (12); and
a cooking side (16) arranged at a second side of the base (12), with the cooking side (16) being oppositely disposed to the heating side (14), wherein the cooking side (16) and optionally also the heating side (14) comprises an at least substantially hydrogen free DLC layer structure (18), especially an arc ion plated, sputtered or Hipims deposited at least substantially hydrogen free DLC layer structure (18).

2. A bakeware, cookware and/or grillware item (10) in accordance with claim 1,
wherein the at least substantially hydrogen free DLC layer structure (18) has a thickness selected in the range of 100 to 2000 nm, in particular of 200 to 1200 nm, especially of 300 to 600 nm.

3. A bakeware, cookware and/or grillware item (10) in accordance with claim 1 or claim 2,
wherein the at least substantially hydrogen free DLC layer structure (18) has a hardness selected in the range of 20 to 70 GPa, in particular of 30 to 50 GPa; and/or
wherein the at least substantially hydrogen free DLC layer structure (18) comprises one or more ta-C layers and/or one or more a-C layers.

4. A bakeware, cookware and/or grillware item (10) in accordance with at least one of the preceding claims,
wherein a proportion of the sp2 to sp3 content of the at least substantially hydrogen free DLC layer structure (18) lies in the range of 30 to 80% sp2 to 70 to 20% sp3, in particular wherein the sp3 content is greater than 30 % sp3 and especially above 40% of the at least substantially hydrogen free DLC layer structure (18); and/or
wherein the at least substantially hydrogen free DLC structure (18) has a coefficient of friction in the range of 0.1 to 0.3 in dry condition, and/or wherein said at least substantially hydrogen free DLC layer structure is a DLC layer structure containing less than 1 at% hydrogen based on 100 at% of the at least substantially hydrogen free DLC layer structure.

5. A bakeware, cookware and/or grillware item (10) in accordance with at least one of the preceding claims,
wherein, if a hydrogen containing reactive gas is used to form the DLC layer structure (18), a hydrogen content of the resultant DLC layer structure (18) is selected in the range between 0.5 and 20 at%.

6. A bakeware, cookware and/or grillware item (10) in accordance with at least one of the preceding claims,
wherein the at least substantially hydrogen free DLC layer structure (18) comprises either a top layer (30) having a dopant present therein, or includes a dopant throughout the at least substantially hydrogen free DLC layer structure (18).

7. A bakeware, cookware and/or grillware item (10) in accordance with claim 6,
wherein the dopant is selected from the group of members consisting of titanium, zirconium, hafnium, vanadium, niobium, tantalum, chromium, molybdenum, tungsten, nitrogen, silicon and combinations of the foregoing, especially wherein the dopant is selected from one of titanium and zirconium; and/or wherein a percentage of the dopant is 0.2 to 10 at%, in particular 0.5 to 6 at%, based on 100 at% of the at least substantially hydrogen free DLC layer structure (18) respectively of the top layer comprising the dopant.

8. A bakeware, cookware and/or grillware item (10) in accordance with at least one of the preceding claims,
further comprising an adhesion layer (28) that is arranged between the base (12) and the at least substantially hydrogen free DLC layer structure (18), with the adhesion layer (28) optionally comprising at least one material selected from the group of members consisting of titanium, zirconium, hafnium, vanadium, niobium, tantalum, chromium, molybdenum, tungsten, nitrogen, silicon and combinations of the foregoing and preferably comprising titanium, in particular wherein the adhesion layer (28) has a layer thickness of 10 to 200 nm, especially wherein the adhesion layer (28) is formed directly on the base (12).

9. A bakeware, cookware and/or grillware item (10) in accordance with at least one of the preceding claims, especially in accordance with claim 8,
further comprising a gradient layer (26) that is formed directly beneath the at least substantially hydrogen free DLC layer structure (18);
in particular wherein the gradient layer (26) comprises a mixture of the materials of at least some of the components forming the at least substantially hydrogen free DLC layer structure (18) and of the layer directly beneath the gradient layer (26),
in particular wherein a layer thickness of the gradient layer (26) is selected in the range of 2 to 500 nm, especially in the range of 5 to 200 nm. especially wherein the gradient layer (26) is either formed directly on the adhesion layer (28) and the material of the layer (28) arranged directly beneath the gradient layer (26) is the material of the adhesion layer (28) or the gradient layer (26) is formed directly on the base (12) and the material of the layer (12') arranged directly beneath the gradient layer (26) is the material of the base (12).

10. A bakeware, cookware and/or grillware item (10) in accordance with at least one of the preceding claims,
wherein the base (12) comprises a metal layer (12'), in particular a metal layer selected from the group of members consisting of an aluminum layer, an aluminum alloy layer, an anodized aluminum layer, a cast aluminum layer, a copper layer, a copper alloy layer, a cast copper layer, an iron layer, an iron alloy layer, a cast iron layer, a stainless steel layer, a polished metal layer, a brushed metal layer, a sanded metal layer, a bead-blasted metal layer, a hammered metal layer and combinations of the foregoing.

11. A method of forming bakeware, cookware and/or grillware items (10), in particular in accordance with at least one of the preceding claims,
the method comprising the following steps,
- placing a plurality of uncoated items of the bakeware, cookware and/or grillware item (10) in a vacuum chamber (60) and evacuating said vacuum chamber (60) and optionally heating said uncoated item to a predetermined temperature;
- etching at least a cooking side (16) of said uncoated item; and
- coating said cooking side (16) with an at least substantially hydrogen free DLC layer structure (18) by means of a PVD process, especially an arc ion plating process, a sputtering process, or a Hipims process.

12. A method in accordance with claim 11,
further comprising a step of forming an adhesion layer (28) between said uncoated item and said at least substantially hydrogen free DLC layer structure (18).

13. A method in accordance with claim 11 or claim 12,
wherein said step of coating said cooking side (16) with an at least substantially hydrogen free DLC layer structure (18) comprises depositing said at least substantially hydrogen free DLC layer structure (18) together with a dopant material.

14. A method in accordance with one of the claims 11 to 13, wherein a temperature of said vacuum chamber (60) is regulated to a temperature in the range of 120 to 250°C, in particular of 160 to 200°C during said step of coating said cooking side (16) with the at least substantially hydrogen free DLC layer structure (18).

15. An apparatus (50) for coating bakeware, cookware and/or grillware items (10), in particular in accordance with at least one of the claims 1 to 10, said apparatus (50) being configured to carry out a method in accordance with one of the claims 11 to 14, the apparatus (50) comprising:
- one or more vacuum chambers (60);
- one or more cathodes (68, 68');
- one or more racks (56) respectively configured to receive a plurality of uncoated items, with the cooking side (16) thereof facing outwardly, with the racks (56) comprising one or more fixation members (74) to hold each of said uncoated items.

16. An apparatus (50) in accordance with claim 15,
wherein the apparatus is a batch processing deposition apparatus (50) in which said one or more racks (56) are arranged on a table (52) and said one or more cathodes (68, 68') are arranged in one or more sidewalls (66) of one vacuum chamber (60); and said table is configured to be rotated about an axis of rotation (58) of the vacuum chamber (60) in order to expose the cooking sides (16) of the plurality of uncoated items to the one or more cathodes (68, 68'), in particular for depositing an at least substantially hydrogen free DLC layer structure (18) on the cooking sides (16) of the plurality of uncoated items.

17. An apparatus (50) in accordance with claim 15,
wherein the apparatus is an inline coating system (50) comprising a plurality of vacuum chambers (60) arranged in a series one after another, wherein said one or more racks (56) are arranged to be moved linearly within the respective chamber (60) and from chamber (60) to chamber (60), wherein each chamber (60) is configured to carry out a process, with the processes being selected from the group of members comprising: heating, evacuating, etching, coating, removing and/or combinations of the foregoing.
